# EUROPEAN PATENT APPLICATION

(11) **EP 1 322 008 A1**
(43) Date of publication of application: **25.06.2003**
(21) Application number: 01610131.3
(22) Date of filing: 20.12.2001
(51) Int. Cl.: H02B 1/015, H01R 13/74, H04Q 1/14

(54) **System comprising a patch panel**

(71) Applicant: Lexel A/S, 1472 Copenhagen K (DK)
(72) Inventor: Jensen, Per, 2770 Kastrup (DK); Sparre, Jon Hjersing, 2765 Smorum (DK)
(74) Representative: Wittrup, Flemming

(57) **Abstract**

The present invention relates to a system comprising a patch panel adapted to be mounted on a mounting structure, the patch panel comprising means for mounting a series of modular jack connectors for interconnecting various transmission media.

The present invention is based on the concept that the patch panel can be attached to the supporting structure using first connecting means allowing the panel to pivot relative to the supporting means, and second connecting means allowing the panel to be secured to the supporting means in a predetermined position. By such an arrangement the panel can be attached in accordance with a two-step procedure in which the first connecting means allows the panel to be connected and/or suspended in an inclined position with the rear surface exposed, after which the panel in a controlled manner can be pivoted towards the position in which it is to be secured using the second connecting means.

## Description

### FIELD OF THE INVENTION

The present invention relates to a system comprising a patch panel adapted to be mounted in a rack or the like and, more particularly, to a patch panel comprising means for mounting a series of modular jack connectors for interconnecting various transmission media.

### BACKGROUND OF THE INVENTION

In buildings and, more particularly, within communications connection closets or cabinets in buildings, various transmission media typically are connected to each other and to incoming and outgoing lines by means, such as connectors, which are mounted to patch panels. Patch panels generally are mounted within a communications closet, such as to a wall, a rack member or other mounting structure, and incorporate a series of connectors for interconnecting the various transmission media. The connector is normally in the form of a modular jack mounted within an opening or the like in the patch panel, the individual jack having wires connected thereto and comprises a plug-receiving cavity adapted to receive a transmission media, such as copper wires formed into patch cord, incorporating a corresponding plug at the end thereof. Although the jacks from time to time may have to be replaced or re-arranged in the patch panel, the mounted jack with their wires connected can be regarded as the "more permanent" part of the installation, which correspondingly have been designed for ease of use for inserting and removing the plugs.

Therefore, the patch panel jacks are normally oriented within the patch panel so that the plug-receiving cavities of the jacks face forward towards an operator, e.g. away from the mounting means to which the patch panel is mounted. So configured, the plugs of patch cords typically have an insertion direction into the plug-receiving cavity of a patch panel jack that is perpendicular with and toward the mounting surface of the patch panel, thereby providing a technician with convenient access for connecting the plugs to and removing the plugs from the various jacks.

When mounting the jacks in the patch panel, the jacks may either be inserted from the front or from the rear of the patch panel. When inserted from the front the wires will normally have to be connected afterwards, as it would be very cumbersome to thread very long wires through the mounting openings in the patch panel before inserting the jack itself. When inserted from the rear it is possible to connect the wires before mounting the jacks just as it would be possible to re-arrange the jacks within the panel without having to disconnect the wires from the jacks.

However, in both cases the rear of the patch panel when mounted in the closet is normally not accessible, which means that the jacks traditionally have been mounted and/or connected before the patch panel is installed in place in the closet.

In its most simple form the patch panel comprises a single, longitudinal member which in a horizontal position is connected to the mounting means, e.g. rack posts, in the closet using mounting screws arranged through slotted openings in the end portions of the panels, the screws connecting the panel to the rack posts. To properly secure the panel, at least two screws are used at each end of a typical panel. An example of such a prior art patch panel is disclosed in US patent 6 086 415 although this prior art document shows a more complicated panel structure comprising different panel members secured to the closet racks by separate bracket members.

As follows from the above, the rigidly connected patch panel is relatively cumbersome to disconnect from the closet when it is desirable to have access to the rear of the panel, for example during servicing or repair procedures, or for the purpose of exchange or re-arrangement of individual jacks.

Correspondingly, in order to allow for easy access to the rear of the patch panel, "pull-out" systems have been proposed, these systems typically comprising a front panel formed integrally with a drawer-like member, which can be pulled out from the closet and subsequently pushed back in again, thereby allowing easy access to the rear of the front panel. The drawer is mounted to the racks of the closet by bracket members allowing the drawer to be moved in and out in a controlled manner, the brackets typically being mounted in the closet in the same way as the above-described fixedly secured panels.

### BRIEF SUMMARY OF THE INVENTION

Having regard to the above, it is an object of the present invention to provide a patch panel which can be mounted to a supporting means such as a rack in a simple and cost-effective manner. It is a further object of the invention to provide a patch panel allowing for easy access to the rear surface thereof when the panel has been connected to the supporting means.

The present invention is based on the realisation that the patch panel advantageously can be attached to the supporting means using first connecting means allowing the panel to pivot relative to the supporting means, the pivot axis being defined by the first connecting means, and second connecting means allowing the panel to be secured to the supporting means in a predetermined position. By such an arrangement the panel can be attached in accordance with a two-step procedure in which the first connecting means allows the panel to be connected and/or suspended in an inclined position with the rear surface exposed, after which the panel in a controlled manner can be pivoted towards the position in which it is to be secured using the second connecting means. The secured "end-position" may be with the panel arranged substantially in a vertical plane, or with the panel tilted forwards or rearwards.

In preferred embodiments the first connecting means allows the panel to be connected without the use of tools, for example by establishing the pivoting connection in a "snap-on" or "hang-on" fashion, the connecting means preferably allowing the panel to be connected within a given range of angular orientations, this being advantageously when, for example, a large panel with a plurality of pre-mounted jacks with their associated wires have to connected, such a panel often being difficult to position in the correct end-position. After the panel has been connected it may either be left in a pivoted position providing access to the jacks from the rear for further mounting, adjusting or servicing work, or it may be pivoted in a controlled manner towards its end-position at which it is secured using the second connecting means.

When it is desirable to access the rear of the panel or to fully remove the panel from the supporting means, the above-described procedures are reversed.

Although the present invention allows the rear of the panel to be easily accesses, it may be desirable to allow the panel to be pulled out as described above, this functionality allowing even better access to the wires connected to the jacks, just as it better allows a rearwardly facing tray to be connected to the front of the panel, the tray typically providing a support for the wires. However, by providing the mounting brackets carrying the pull-out section of the panel with first and second connecting means in accordance with the invention, ease of mounting is provided just as the user has the option of either pivoting the panel or to pull it out.

In a preferred embodiment the panel has a generally longitudinal configuration comprising first and second opposed end portions being adapted to be mounted on vertically arranged, equidistant supporting means, e.g. rack posts arranged within a closet, first and second connecting means being provided at both ends.

In a further preferred embodiment the supporting means comprises a series of openings or cut-out portions, each opening or cut-out portion allowing both the first and second connecting means to engage, thereby establishing the pivoting respectively the securing functionality.

### BRIEF DESCRIPTION OF THE DRAWINGS

In the following the invention will be further described with references to the drawings, wherein
figs. 1-3 show a first embodiment of a system according to the invention, the series of figures showing in sequence the attachment procedure of the patch panel,
figs. 4-6 show the embodiment and sequence of figs. 1-3 in a different view,
figs. 7A and 7B show a connecting means providing a hinge function,
figs. 8-11 show a second embodiment of a system according to the invention, the series of figs. showing in sequence the attachment procedure of the patch panel,
figs. 12 and 13 show the embodiment of figs 8-11, the figs. showing a pull-out feature.

### DESCRIPTION OF THE PREFERRED EMBODIMENTS

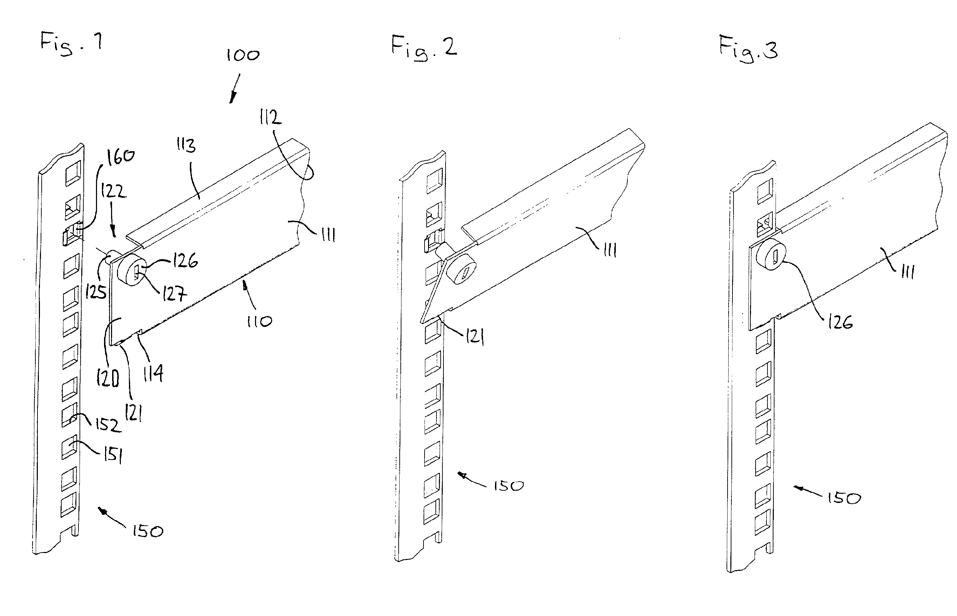

Fig. 1 shows a first embodiment of the invention in which a patch panel system comprises a patch panel and thereto corresponding mounting means to which the patch panel can be secured. Shown in the figs. are a left-most end portion of the patch panel 100 and a middle portion of a rack post 150 serving as the mounting means. The patch panel further comprises a right-most portion (not shown) as well as a thereto corresponding rack post (not shown). The patch panel has a generally longitudinal configuration as is primarily intended for being horizontally mounted to vertically oriented rack posts.

The patch panel comprises a planar front panel portion 110 having a front and a rear surface 111, 112 and upper and lower bend-over flanges 113, 114 projecting rearward from an upper respectively a lower edge of the front panel, as well as a first bracket portion 120 at the left-most end thereof and a right-most bracket portion (not shown) at the opposite end. In the shown embodiment the front panel portion and the bracket portion is formed integrally with each other as portions of a sheet metal member, however, the bracket portions may be formed as separate members which can be attached to the front panel portion. The front panel portion comprises means (not shown) for connecting at least one jack connector thereto, preferably in the form of a plurality of identical openings allowing identical or different modular jack connectors to be attached thereto, either from the front or from the rear surface.

Each of the bracket portions comprise first and second connecting means 121, 122 arranged corresponding to the lower respectively the upper portion thereof, for which reason they are termed lower and upper connecting means in the following. The lower connecting means 121 are adapted for connecting to a first 150 respectively a second rack post (not shown) thereby providing a pivot means or a hinge, the pivot axis being substantially parallel with the lower edge of the front panel. The second connecting means 122 are adapted for connecting and securing the patch panel to the rack posts in a locked position.

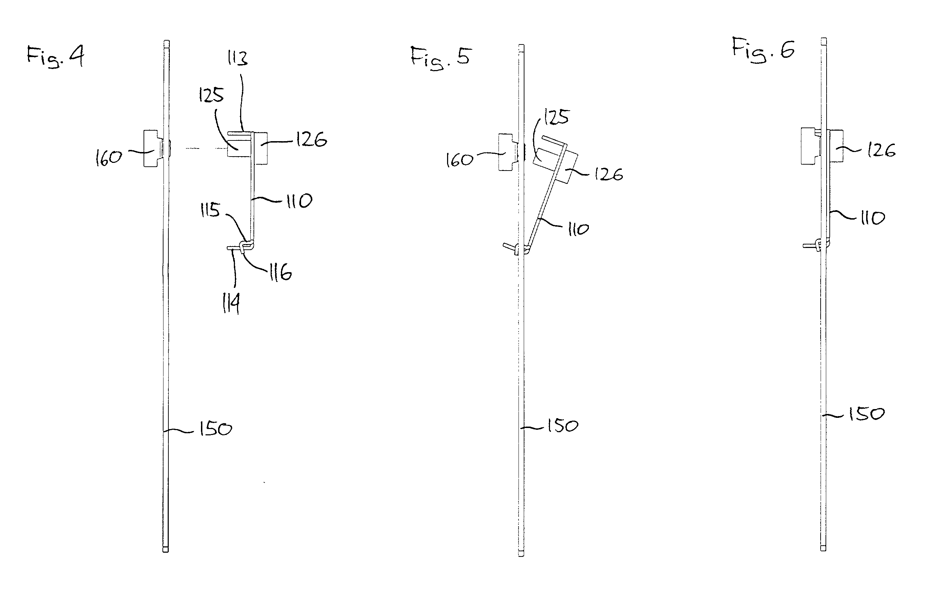

The connecting means will be described in greater detail below with reference to figs. 4-6.

In the simplest form each of the rack posts comprise an upper connecting means and a lower connecting means adapted for mating engagement with the corresponding connecting means of the patch panel, however, in order to provide a high degree of flexibility each of the shown rack posts comprise a plurality of equidistantly arranged identical connecting means in the form of openings 151 allowing either the upper or lower connecting means of the patch panel to be connected. The rack post is shown as a flat member, however, preferably a flange or the like is provided to provide the necessary strength.

Figs. 1-3 show in sequence the attachment procedure of a patch panel in accordance with the invention. In fig. 1 the panel is held at a distance from the rack posts, in fig. 2 the panel has been attached to the rack posts corresponding to the lower connecting means 121 and is pivoted somewhat outwardly, and in fig. 3 the patch panel is pivoted into a vertical position, after which it can be secured to the rack posts by means of the upper connecting means 126.

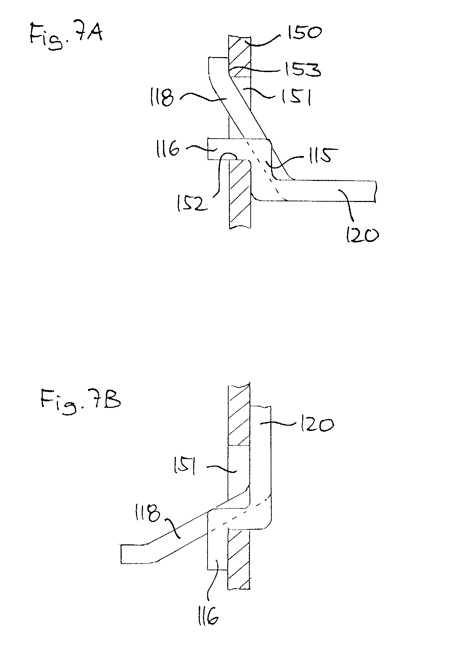

The connecting means will now be described with reference to figs. 4-6 showing the patch panel 100 and rack post 150 as described above with reference to fig. 1, however, now shown in an end view in parallel with the front panel. The lower connecting means 121 on the patch panel comprises a bend hook-like member connected with the bracket portion at the lower edge thereof, the hook-like member comprising a first portion 115 projecting rearwardly and a second portion 116 connected thereto and projecting downwardly, whereby the hook-like member can be supported on an upper edge 152 of an opening in the rack post (see fig. 1), the second portion engaging a rear surface of the rack post, this as shown in fig. 5. Hereafter the panel can be pivoted to an upright position in which the upper connecting means on the panel can be brought into mating engagement with the rack post as shown in fig.6.

In the shown embodiment the upper connecting means comprises a male and a female component mounted in the patch panel respectively the rack post. The female component 160 is adapted to be mounted in an opening of the rack post and comprises a receiving opening. The male component is arranged through an opening in the patch panel and comprises a gripping portion 125 located on the rear of the panel and a head portion 126 located on the front of the panel, the gripping portion being adapted to be inserted into the receiving opening of the female member. When inserted, the gripping portion can be rotated into a locked position by turning the head portion, for example 90 degrees by use of a screwdriver inserted into a slot 127 in the head (see fig. 1), thereby positively securing the patch panel to the rack post, the hook member of the lower connecting means further securing the panel.

With reference to figs. 1-6 a preferred embodiment of the invention has been described, however, many modifications could be made without departing from the general concept of the invention.

For example, the first and second connecting means do not have to be arranged at opposite ends of the patch panel but may be arranged at any desired location, e.g. for a very long panel a third set of connecting means may be arranged in the middle, just as the first and second connecting means may be separated from each other and arranged at different positions, this including the first pivoting connecting means arranged above the securing second connecting means. Also the number of first and second connecting means may differ, e.g. it may be desirable to provide only two first connecting means (establishing a pivot axis) in combination with one, two, three or four second connection means.

In the shown embodiment the corresponding lower connecting means on the panel respectively the rack post is formed by simple stamped and/or bend structures, whereas the corresponding upper connecting means are formed by two separate members attached to the panel respectively the rack post, however, given the specified function, i.e. a pivoting first connection and a securing second connection, a wide varity of connecting means can be envisaged, each of the connecting means comprising none, one, two or more additional components in any given combination.

From a functional point of view, it is to be noticed that for the shown embodiment the patch panel is not self-suspended when engaged corresponding to the lower connecting means, i.e. when the panel is not supported by some further means, e.g. the person mounting the panel, it will disengage and drop out of engagement. However, in many circumstances it will be desirable that the panel can be left in a pivoted position allowing access to the rear of the panel, for example during servicing or repair procedures, or for the purpose of exchange or re-arrangement of individual jacks.

Such a positively engaging pivotable connection could be realized in many different ways, for example in a very simple manner by providing the lower connecting means of the panel with an additional projection adapted to engage a rear surface of the rack post. Figs. 7A and 7B illustrate such a modified connecting means comprising a hook-member 115, 116 as described above in combination with a further member 117 which with the panel arranged in a horizontal position rests against a rear surface portion 153 of the rack posts thereby suspending the panel in the horizontal position as shown in fig. 7A, fig. 7B showing the situation when the panel is pivoted to an upright position. Indeed, by using specialized components a "proper" hinge could be established, for example an axle member arranged on the panel which can snap into engagement with a corresponding female member. Also, the means for suspending the panel in a pivoted position need not be associated with the first connecting means.

In the shown embodiment the front of the panel is secured in a vertical position, however, for many purposes an angled position would be desirable, for example facing somewhat downwardly allowing better access when mounted in a high position.

In the shown embodiment the mounting surface to which the patch panel is connected is provided by two rack posts arranged in a closet, however, the rack posts may be arranged outside a closet just as the mounting surface may be provided by any suitable structure, e.g. flange members projecting from an interior surface of a closet.

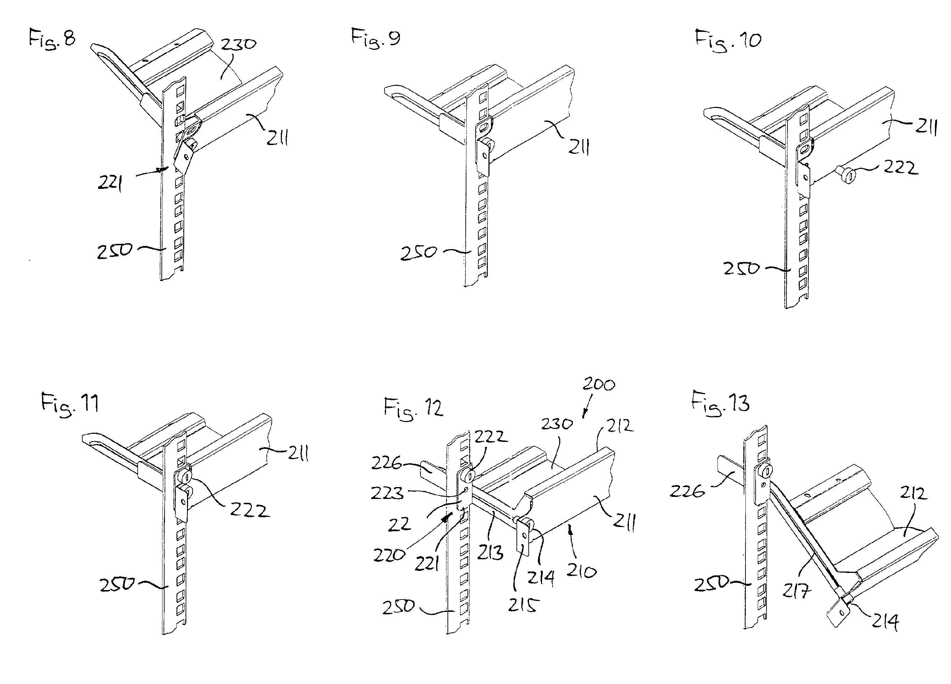

Next a second preferred embodiment of the invention will be described with reference to figs. 8-13.

Fig. 12 (which best illustrate the different components) shows a patch panel system comprising a patch panel and thereto corresponding mounting structure to which the patch panel can be secured. Shown in the figs. are a left-most end portion of the patch panel 200 and a middle portion of a rack post 250 serving as the mounting structure. The patch panel further comprises a right-most portion (not shown) as well as a thereto corresponding second rack post (not shown). The patch panel has a generally longitudinal configuration as is primarily intended for being horizontally mounted to vertically oriented rack posts.

The patch panel comprises three major components, a drawer as well as two mounting members in the form of brackets adapted for mounting to the rack posts, mating connection means being provided on the drawer respectively the brackets allowing the drawer to be moved relative to the brackets in a controlled fashion.

The drawer comprises a planar front panel portion 210 having a front surface 211 and a tray portion 230 projecting rearwardly corresponding to a lower edge of the front, however, as appears the tray is connected to the upper edge of the front by a bend-down flange portion 212 (see fig. 13). The front panel portion comprises means (not shown) for connecting at least one jack connector thereto, preferably in the form of a plurality of identical openings allowing identical or different modular jack connectors to be attached thereto, either from the front or from the rear surface. The drawer further comprises two side members 213 (only the left-most is shown) projecting rearwardly from the front panel, the side members providing support for the tray member 230 as well as connects to the respective brackets 220 for providing the drawer function. The lateral-most portions of the front panel is provided with securing means 214 allowing the drawer to be secured to the brackets as well as forwardly projecting flange members allowing further components to be attached.

Each of the mounting brackets 220 comprises a front portion 225 and a rearwardly projecting side portion 226, the side portion being arranged generally in parallel with the corresponding side member of the drawer, the side portion being connected with the side member of to the drawer to thereby support it, the side portion and the side member in combination providing the drawer function. In the shown embodiment the drawer function is provided by a simple slot 217 in the side member through which one or more pins projecting from the side portion is arranged, this allowing the drawer to slide relative to the mounting bracket. To further control the movement of the drawer, additional means may be provided (not shown) as will be discussed below.

The front portion of the bracket comprises upper and lower connecting means 222, 221 adapted for connecting to a first 250 respectively a second rack post (not shown). The connecting means on the mounting bracket substantially correspond to the connecting means described with reference to the first embodiment, whereto reference is made. As seen, the front portion comprises a further connecting means 223 adapted to cooperate with the securing means 214 on the drawer.

The shown rack post 250 comprise a plurality of equidistantly arranged identical connecting means in the form of openings 251 allowing either the upper or lower connecting means of the patch panel to be connected at any desired location. The rack post is shown as a flat member, however, preferably a flange or the like is provided to provide the necessary strength.

Figs. 8-11 show in sequence the attachment procedure of a patch panel in accordance with the second embodiment of the invention. More specifically, figs. 8-11 show the drawer secured to the mounting bracket(s) by means of the securing means 214, 223 providing a patch paned in a "fixed" configuration ready for mounting on the rack posts. In fig. 8 the panel has been attached to the rack posts corresponding to the lower connecting means 221 and is pivoted somewhat outwardly, in fig. 9 the patch panel is pivoted into a vertical position, after which it is secured to the rack posts by means of the upper connecting means 222 which in contrast to the first embodiment is not pre-mounted (figs. 10 and 11).

Figs. 12 and 13 show in sequence how the drawer function can be used. The securing means 214 may either be of the snap-on type, or they may be actuatable between a locked and an un-locked position. In either way, the securing means 214 allows the drawer to be pulled linearly out from the rack as seen in fig. 12. Depending on the actual design of the connection between the drawer and the mounting brackets, it may be possible to pivot the drawer downwardly when fully pulled out from the rack, this providing improved access to the rear of the front panel as well as to the tray and the therein situated wiring. When work is finished, the steps are reversed. Although it is preferred that the drawer can be secured in a locked position, this feature can be dispensed with, for example when the drawer is arranged to be pulled inwardly by gravity.

## Claims

1. A system comprising a patch panel (100) and a mounting structure (150),
- the patch panel comprising a panel portion (110) having means for connecting at least one jack connector thereto,
- wherein the patch panel and the mounting structure include mating first connecting means (121, 151) and mating second connecting means (122, 151),
- the first connecting means allowing the patch panel to be pivotably connected to the mounting structure, the first connecting means defining a pivoting axis, and
- the second connecting means allowing the patch panel to be secured to the mounting structure in a predetermined position when pivoted thereinto.

2. A system as defined in claim 1, wherein the patch panel has a generally longitudinal configuration with first and second connecting portions (120) spaced axially from each other, the first and second connecting means being arranged corresponding to the connecting portions.

3. A system as defined in claim 2, wherein the connecting portions are provided as
opposed end portions, each end portion comprising upper and lower portions, first connecting means being arranged corresponding to the lower portion, and second connecting means being arranged corresponding to the upper portion.

4. A system as defined in any of the previous claims, wherein the second connecting means (122, 126) are actuatable between a first position and a second position, the first position allowing the patch panel to be moved relative to the supporting structure, the second position securing the patch panel in the predetermined position.

5. A system as defined in any of the previous claims, wherein the supporting structure comprises two spaced apart, equidistantly arranged supporting members (150) comprising first and second connecting means adapted to mate with corresponding first and second connecting means on the patch panel.

6. A system as defined in claim 5, wherein the supporting members each comprise a plurality of equidistantly arranged identical connecting means in the form of openings (151) or cut-out portions allowing either the upper or lower connecting means of the patch panel to be connected at any desired location.

7. A system as defined in claim 6, wherein the first connecting means on the patch panel comprise a hook member (115, 116) adapted to engage a lower edge (152) of the openings or cut-out portions in the supporting members, the hook member and the lower edge providing a pivoting connection.

8. A system as defined in any of the previous claims, further comprising means (118) for suspending the panel in a pivoted position.

9. A system as defined in any of the previous claims, wherein the patch panel comprises a drawer (210) and two mounting members (220), the patch panel and the mounting members including mating connection means (213, 226) allowing the drawer to be moved relative to the mounting members in a controlled fashion.

10. A system as defined in claim 9, wherein the first and second connecting means (221, 222) of the patch panel are arranged on the mounting members.

11. A system as defined in claim 9 or 10, wherein the drawer and the mounting members include mating third connecting means (214) allowing the drawer to be secured to the mounting member.
